# EUROPEAN PATENT APPLICATION

(11) **EP 3 620 411 A1**
(43) Date of publication of application: **11.03.2020**
(21) Application number: 18193246.8
(22) Date of filing: 07.09.2018
(51) Int. Cl.: B65G 47/08, B65G 54/02, B65B 35/30

(54) **A CONTROLLED MOTION SYSTEM**

(71) Applicant: Tetra Laval Holdings & Finance S.A., 1009 Pully (CH)
(72) Inventor: Schou Kongstad, Christoffer, 22732 Lund (SE); Pihlström, Josef, 22651 (SE)
(74) Representative: Tetra Pak - Patent Attorneys SE

(57) **Abstract**

A controlled motion system (100), comprising a plurality of movers (101, 102, 103) being movably mounted on a linear track (104), a control unit (106) configured to control the speed of the plurality of movers (101, 102, 103) and the individual positions thereof, a first mover (101) comprises a first article receiving unit (a₁) configured to intersect a conveyor track (109), along which articles (300) are conveyed with a conveyor speed in a conveyor direction (110), the first article receiving unit (a₁) is configured to engage a first pair (301) of the articles (300), the control unit (106) is configured to accelerate (a) or decelerate (d) the first mover (101) to a first speed, different from the conveyor speed, to push articles (302, 303) of the first pair (301) on the conveyor track (109), along the conveyor direction (110), with the first article receiving unit (a₁).

## Description

### Technical Field

The invention relates generally to the field of sequencing and guiding articles such as packages containing liquid or pourable food products. The invention relates in particular to a controlled motion system comprising a plurality of movers being movably mounted on a linear track to engage such articles conveyed on a conveyor track, and a related method.

### Background

As is known, many pourable food products are manufactured and sold in packages made of sterilized sheet packaging material. Given numbers of finished packages are grouped and packed in packing materials, e.g. cardboard and/or plastic film, to form modules for transport to retailers. For this purpose, the packages exiting from a typical folding unit have to be sequenced and grouped to form a plurality of package batches, which are formed by a given numbers of packages. The packages are conveyed from the folding unit having certain distances from one another and are subsequently manipulated to be combined into groups or batches.

Conveyor systems based on linear motor technology have been proposed for sequencing and grouping items, in particular packages or containers. These conveyor systems typically comprise a closed loop track, and a plurality of movable elements or carts, which are independently moved along the track by individually controlling a plurality of solenoids along the linear track.

With the endeavor of continuously increasing the capacity of the production lines, to increase the throughput of manufactured packages, there is however an associated problem of attaining a sufficient speed of manipulation of the packages, in a resource efficient manner. Problems with previous solutions thus typically involve limitations in the manipulation speed, and/or complex and resource demanding solutions for attaining a higher throughput.

### Summary

It is an object of the invention to at least partly overcome one or more limitations of the prior art. In particular, it is an object to provide an improved controlled motion system with a higher efficiency for sequencing and guiding articles along a conveyor.

In a first aspect of the invention, this is achieved by a controlled motion system, comprising a linear track, a plurality of movers being movably mounted on the linear track for moving along a path, a control unit in communication with the plurality of movers and configured to control the speed of the plurality of movers and the individual positions thereof along the path, wherein a first mover comprises a first article receiving unit configured to move along the path to intersect a conveyor track, along which articles are conveyed with a conveyor speed in a conveyor direction, whereby the first article receiving unit is configured to engage a first pair of the articles, by being moved in between the articles of the first pair, for manipulating the positions thereof along the conveyor direction, wherein the control unit is configured to accelerate or decelerate the first mover to a first speed, different from the conveyor speed, to push articles of the first pair on the conveyor track, along the conveyor direction, with the first article receiving unit.

In a second aspect of the invention, this is achieved by a method in a controlled motion system having a linear track and a plurality of movers being movably mounted on the linear track for moving along a path, the method comprising moving a first article receiving unit of a first mover to intersect a conveyor track, along which articles are conveyed with a conveyor speed in a conveyor direction, engaging a first pair of the articles by moving the first article receiving unit in between the articles of the first pair for manipulating the positions thereof along the conveyor direction, accelerating or decelerating the first mover to a first speed, different from the conveyor speed, to push articles of the first pair on the conveyor track, along the conveyor direction, with the first article receiving unit.

In a third aspect of the invention, this is achieved by a computer program product comprising instructions which, when the program is executed by a computer, cause the computer to carry out the steps of the method according to the second aspect.

In a fourth aspect of the invention, this is achieved by a packaging machine comprising a controlled motion system according to the first aspect, and/or performing the method according to the second aspect.

Further examples of the invention are defined in the dependent claims, wherein features for the first aspect may be implemented for the second and subsequent aspects, and vice versa.

Having a control unit configured to accelerate or decelerate a mover with an article receiving, configured to engage a first pair of articles, by being moved in between the pair of articles, to a speed different from the conveyor speed, to push the articles of the first pair on the conveyor track, provides for increasing the speed and efficiency by which the articles are manipulated. The article receiving unit can thus push both articles of a first par, in two directions, by being accelerated or decelerated, e.g. in a sequential manner.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1 is a schematic view of a controlled motion system with a linear track and a plurality of movers intersecting a conveyor track along which articles are conveyed;
Fig. 2 is a schematic view of a sequence of articles being conveyed along the conveyor track;
Fig. 3 is a schematic view of a sequence of articles being conveyed along the conveyor track and a first article receiving unit positioned between a gap between the articles;
Fig. 4 is a schematic view of a sequence of articles being conveyed along the conveyor track with first and second article receiving units positioned between gaps between the articles;
Fig. 5 is a schematic view of a sequence of articles being conveyed along the conveyor track with first, second and third article receiving units positioned between gaps between the articles;
Fig. 6 is a schematic view of a sequence of articles being conveyed along the conveyor track with first, second and third article receiving units pushing the articles into groups, with a first group completed;
Fig. 7 is a schematic view of a sequence of articles being conveyed along the conveyor track with first, second and third article receiving units pushing the articles into groups, with first and second groups completed; and
Fig. 8 is a flowchart of a method in a controlled motion system.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

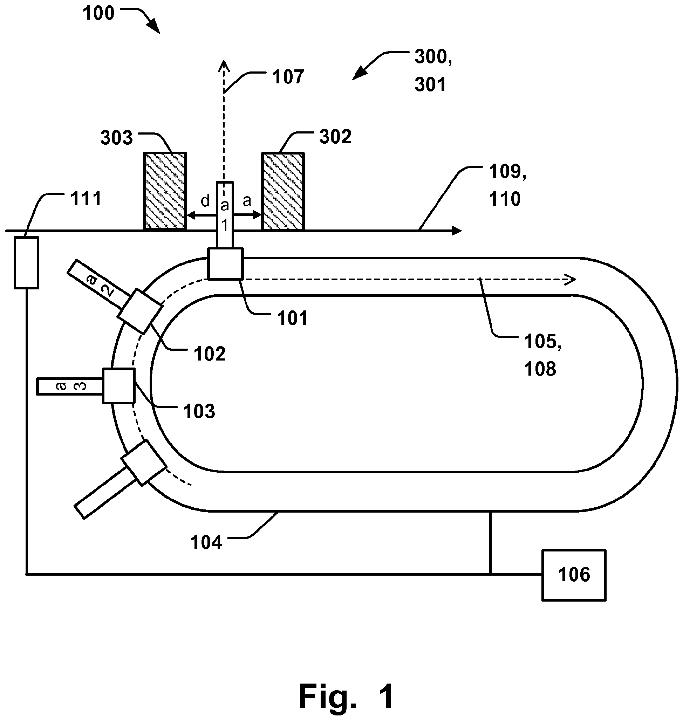

Fig. 1 is a schematic overview of a controlled motion system 100 comprising a linear track 104 and a plurality of movers 101, 102, 103, being movably mounted on the linear track 104 for moving along a path 105. The linear track 104 may be an endless loop as exemplified in Fig. 1. Although the linear track 104 is shown as an elliptic track, it is conceivable that the track 104 may have varying shapes, i.e. extending along a variety of curves with different radiuses of curvatures. The controlled motion system 100 comprises a control unit 106 in communication with the plurality of movers 101, 102, 103, and which is configured to control the speed of the plurality of movers 101, 102, 103, and the individual positions thereof along the path 105. As exemplified in Fig. 1, a first mover 101, of the plurality of movers 101, 102, 103, comprises a first article receiving unit (a₁) configured to move along the path 105 to intersect a conveyor track 109. Articles 300 are conveyed with a conveyor speed in a conveyor direction 110 along the conveyor track 109. The linear track 104 is thus positionable adjacent the conveyor track 109 so that the first article receiving unit (a₁) can intersect the articles 300. The first article receiving unit (a₁) is configured to engage a first pair 301 of the articles 300, by being movable in between articles 302, 303, of the first pair 301, for manipulating the positions thereof along the conveyor direction 110. The control unit 106 may be configured to control the positioning and trajectory of the first article receiving unit (a₁) along the path 105 so it is positioned between the first pair 301 when moving from the curved section of the linear track 104 to the straight section thereof, as schematically illustrated in Fig. 1. The size and timing of the gaps between the articles 300 on the conveyor track 109 may be determined by a sensor module 111. The sensor module 111 may thus be in communication with the control unit 106. The control unit 106 may be configured to accelerate or decelerate the plurality of movers 101, 102, 103, so that the corresponding article receiving units (a₁, a₂, a₃) can move with a desired timing into the gaps between the articles 300. In another example, the article receiving units (a₁, a₂, a₃) may be movable in a direction 107, perpendicular to the linear track 104, from a retracted position to an extended position to be positioned in the gaps between the articles 300.

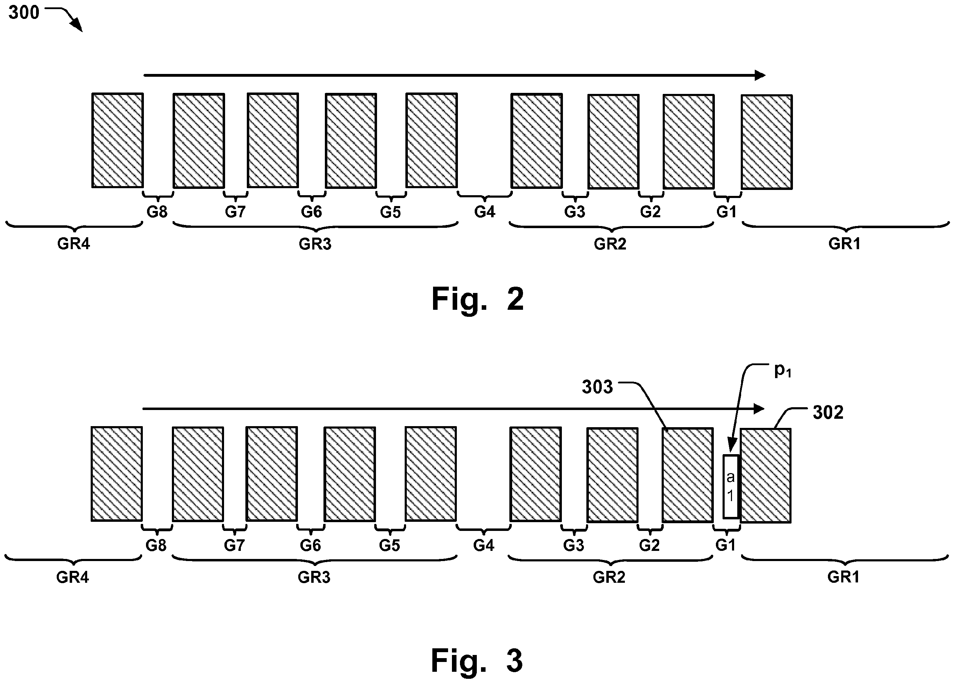

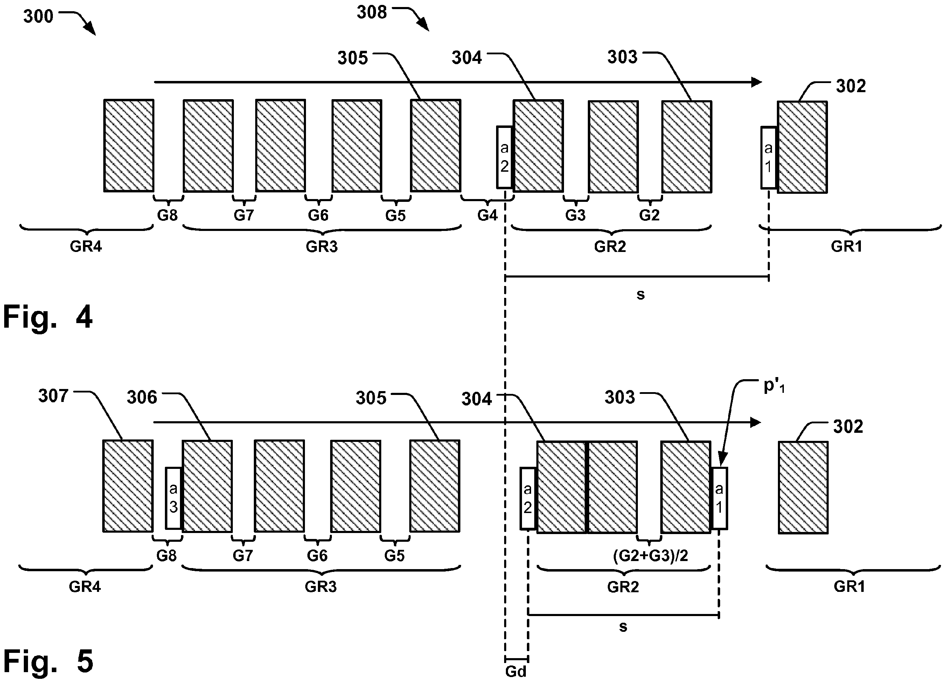

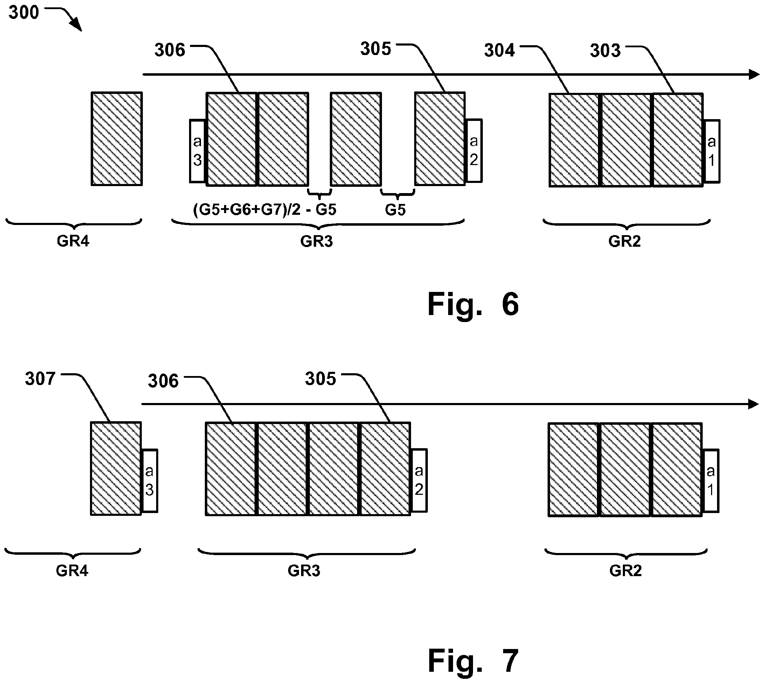

The article receiving units (a₁, a₂, a₃) may be elongated elements fixed to respective movers 101, 102, 103, with narrow widths along the direction of the conveyor track 109 for facilitated positioning in between the gaps. As schematically illustrated in Fig. 1, the control unit 106 may be configured to accelerate (a) or decelerate (d) the first mover 101 to a first speed, different from the conveyor speed, to push the articles 302, 303, of the first pair 301 on the conveyor track 109, along the conveyor direction 110, with the first article receiving unit (a₁). The first mover 101 may accordingly be controlled to assume a speed matching the speed of the conveyor track 109 for being inserted into the gap between the articles 302, 303, of the first pair 301, before being subjected to a speed change, i.e. accelerated or decelerated, to cause the associated article receiving unit (a₁) to engage any of the articles 302, 303. I.e. the first mover 101 and the associated first article receiving unit (a₁) may be accelerated or decelerated to engage both articles 302, 303, of the first pair 301. Thus, only one article receiving unit (a₁, a₂, a₃) needs to be inserted in selected gaps to form desired groups of articles 300. Each such gap do not need to accommodate more than one article receiving unit (a₁, a₂, a₃). This minimizes the number of article receiving units (a₁, a₂, a₃) interacting with each group of articles 300 which is to be formed. For example, turning to Fig. 3 - 6, the first article receiving unit (a₁) is inserted in gap G1 (Fig. 3), and is accelerated to push a first article 302 along the conveyor track 109 (Fig. 4), before being decelerated to engage a second article 303 of the first pair 301 (Fig. 5) and close a previous gap G2 to form a group GR2 (Fig. 6).

A more efficient grouping of the articles 300 can thus be achieved. This provides for increasing the capacity of the production line or provide a more robust manipulation of articles with a maintained capacity, e.g. allowing a lowered conveyor speed.

The control unit 106 may be configured to accelerate or decelerate the first mover 101 to push at least one article 302, 303, of the first pair 301 in a first direction with the first article receiving unit (a₁), downstream or upstream of the conveyor direction 110, and to subsequently accelerate or decelerate the first mover (a₁) to push at least one article 302, 303, in a second direction, opposite the first direction. E.g. although the sequence described in the example of Figs. 3-6 shows pushing a first article 302 downstream of the conveyor direction 110 and then pushing a second article upstream of the conveyor direction 110, it is conceivable that the sequence is reversed.

The control unit 106 may be configured to accelerate the first mover (a₁) to push a leading article 302 of the first pair 301 downstream of the conveyor direction 110 with the first article receiving unit (a₁), and to decelerate the first mover to 101 push a trailing article 303 of the first pair 301 upstream of the conveyor direction 110 with the first article receiving unit (a₁). The acceleration and deceleration may thus occur in a sequential manner during the period of time the first article receiving unit (a₁) is positioned in gap G1, as exemplified in Figs. 3 - 6.

The controlled motion system 100 may comprise a second mover 103 comprising a second article receiving unit (a₂), as seen in Figs. 4 - 7. The second article receiving unit (a₂) may be configured to engage a second pair 308 of the articles 300, by being movable in between the articles 304, 305, of the second pair 308, upstream or downstream of the first article receiving unit (a₁). I.e. although Figs. 4 - 7 show the second article receiving unit (a₂) upstream of the first article receiving unit (a₁), relative to the conveyor direction 110, is conceivable that the first and second article receiving units (a₁, a₂) are arranged in the reversed order. The second article receiving unit (a₂) has a separation distance (s) from the first article receiving unit (a₁), as indicated in the example of Figs. 4 - 5. The first and second article receiving units (a₁, a₂) may be configured to accelerate or decelerate so that the separation distance (s) is increased or decreased, to push at least one article 302, 303, 304, 305, of the first or second pair 301, 308, on the conveyor track 109. A particularly efficient grouping of the articles 300 may thus be achieved where the separation distance may first be decreased, as seen in Fig. 5 to reduce the gaps G2, G3, of group GR2, before being increased again, as seen in Fig. 6 where the second article receiving unit (a₂) is decelerated to move upstream to engage a leading article 305 of a subsequent group GR3, which is finally compacted in Fig. 7. The sequential and variable downstream and upstream movement of the first and second article receiving units (a₁, a₂) as exemplified above provides accordingly for a more efficient and resource efficient grouping of the articles 300.

Accordingly, the separation distance (s) may be decreased so that a group of articles (GR2) positioned between the first and second article receiving units (a₁, a₂) are pushed together, whereby at least one gap (G2, G3) between the articles is reduced. As seen in the example of Fig. 4 and 5, a gap G3 has been closed by advancing the second article receiving units (a₂). A fraction of gap G2 has also been closed, as explained in more detail below.

As elucidated above, the second article receiving unit (a₂) may be configured to be accelerated to push a leading article 304 of the second pair 308 downstream of the conveyor direction 110, as seen in Figs. 4 - 5, and to be decelerated to push a trailing article 305 of the second pair 308 upstream of the conveyor direction 110, as seen in Figs. 6 - 7. The first article receiving unit (a₁) may be configured to be accelerated and decelerated according to the same sequence. This sequential movement allows the articles 300 to be grouped towards the center of each group, e.g. with a first downstream push from the second article receiving unit (a₂) being accelerated (Figs. 4-5), to reduce part of the total gap between the articles 300, and a subsequent upstream push from the first article receiving unit (a₁) being decelerated (Figs. 5-6), to reduce the remaining part of the total gap between the articles 300, thus forming group GR2. By doing this, by the end of the grouping process one article receiving unit (a₁, a₂) has interacted with two separate groups, removing a part of the total gap in each group, e.g. half of the total gap as exemplified below. This enables the use of one article receiving unit (a₁, a₂) per group allowing for minimizing the minimum gap between packages.

As exemplified, the second article receiving unit (a₂) may be positioned upstream of the first article receiving unit (a₁), relative the conveyor direction 110. The separation distance (s) is thus reduced when the second article receiving unit (a₂) is accelerated, given a constant speed of the first article receiving unit (a₁). It should be understood however that other configurations are possible, with a reversed arrangement as mentioned above, while still providing for the advantageous benefits as discussed in relation to Fig. 1 - 7.

The second article receiving unit (a₂) may be configured to be accelerated to push a leading article 304 of the second pair 308 downstream of the conveyor direction 110, and the first article receiving unit (a₁) may be configured to be decelerated to push a trailing article 303 of the first pair 301 upstream of the conveyor direction 110, as exemplified in Figs. 4-6 to form a group GR2. Similarly, a subsequent group GR3 may be formed by having a third article receiving unit (a₃), upstream of the second article receiving unit (a₂), configured to be accelerated to push an article 306 downstream of the conveyor direction 110 (Figs. 5-6), and the second article receiving unit (a₂) decelerating to push an article 305 upstream of the conveyor direction 110 (Figs. 6-7). A first portion of the total gap between the articles of group GR3 is thus first reduced by the accelerating third article receiving unit (a₃), and the remaining portion of the total gap between the articles of group GR3 is reduced by the decelerating second article receiving unit (a₂), according to the principle described above. A plurality of movers 101, 102, 103, and associated article receiving units (a₁, a₂, a₃) may thus sequentially cooperate as described to form defined groups of articles 300 along the conveyor track 109.

Turning again to the example of Figs. 4-5, the second article receiving unit (a₂) may be configured to push a first determined distance (Gd) in the downstream direction based on a first fraction of the total gap (GT) between a group of articles (GR2) positioned between the first and second article receiving units (a₁, a₂).

The first determined distance (Gd) may be half the distance of the total gap (GT). Thus, in the example of Figs. 4-5, the first determined distance Gd is GT/2 = (G2+G3)/2. Similarly, the third article receiving unit (a₃) may be configured to push a determined distance (Gd) in the downstream direction based on a fraction of the total gap (GT) between a group of articles (GR3). In case the fraction is half the distance of the total gap (GT) in group GR3, Gd is given by (G5+G6+G7)/2.

The first article receiving unit (a₁) may be configured to push a second determined distance (Gd') upstream based on a second fraction of the total gap (GT). I.e. the first article receiving unit (a₁) may reduce the total gap (GT) further, e.g. close the remaining gap as explained in relation to Figs. 4-6, or in relation to Figs. 6-7 for the second article receiving unit (a₂) which is configured to push a second determined distance (Gd') upstream based on a second fraction of the total gap (GT) in group GR3.

The second determined distance (Gd') may thus be GT - Gd, for both groups GR2 and GR3, and it should be understood that this principle can be applied to any plurality of articles 300 to be grouped.

The first article receiving unit (a₁) may be configured to move with the conveyor speed when at an intermediate position (p₁, p'₁) adjacent an article 302, 303, before being accelerated or decelerated to push an article 302, 303. Thus, as seen in Fig. 3, the first article receiving unit (a₁) can be positioned adjacent an article 302 without pushing the article 302 in any direction on the conveyor track 109. The first article receiving unit (a₁) is then ready to engage the article 302 (Fig. 4) with a precise timing. Fig. 5 show a corresponding intermediate position (p'₁) of the first article receiving unit (a₁) before engaging to push article 303 (Fig. 6). The second and third article receiving units (a₁, a₂, a₃) may be operated according to the same principle.

Hence, the first article receiving unit (a₁) may be configured to be positioned at a first intermediate position (p₃) adjacent a first article 302 of the first pair 301 (Fig. 3), before subsequently pushing the first article 302 in a first direction, and to be positioned at a second intermediate position (p'₃) at a second article 303 of the first pair 301 (Fig. 5), before pushing the second article 303, in a direction opposite the first direction. This provides for increasing the accuracy and a more robust grouping of the articles 300.

As mentioned, the second article receiving unit (a₂) may be positioned upstream of the first article receiving unit (a₁). The second article receiving unit (a₂) may be configured to be accelerated to reduce the separation distance (s) while the first article receiving unit (a₁) is in an intermediate position (p'₁) adjacent the last article 303 in the group of articles (GR2) between the first and second article receiving units (a₁, a₂). Hence, the first and second article receiving units (a₁, a₂) may move with the same sequence of motions and positions, e.g. 1) intermediate position (p₁) at a trailing article (302, 304, 306) of a group (GR1, GR2, GR3); 2) push the trailing article downstream; 3) intermediate position (p'₁) at a leading article (303, 305, 307) of a group (GR1, GR2, GR3); 4) push leading article upstream, but the sequence may be off-set with one step between two adjacent article receiving units (a₁, a₂, a₃). I.e. while the first article receiving unit (a₁) may be at step 1, the second article receiving unit (a₂) may be at step 2, and so on.

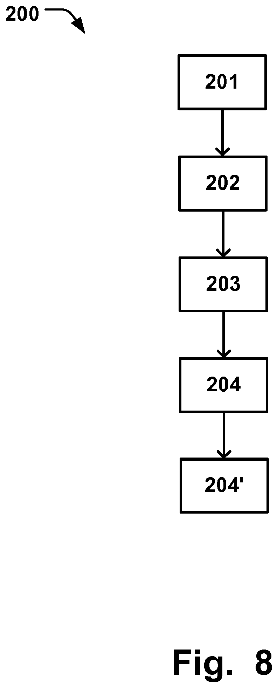

Fig. 8 illustrates a flow chart of a method 200 in a controlled motion system 100 as described above in relation to Figs. 1 - 7. The order in which the steps of the method 200 are described and illustrated should not be construed as limiting and it is conceivable that the steps can be performed in varying order. The controlled motion system 100 comprises a linear track 104 and a plurality of movers 101, 102, 103, being movably mounted on the linear track 104 for moving along a path 105. The method 200 comprises moving 201 a first article receiving unit (a₁) of a first mover 101 to intersect 202 a conveyor track 109, along which articles 300 are conveyed with a conveyor speed in a conveyor direction 110. The method 200 comprises engaging 203 a first pair 301 of the articles 300 by moving the first article receiving unit (a₁) in between the articles 302, 303, of the first pair 301 for manipulating the positions thereof along the conveyor direction 110. The method 200 comprises accelerating 204 or decelerating 205 the first mover 101 to a first speed, different from the conveyor speed, to push the articles 302, 303, of the first pair 301 on the conveyor track 109, along the conveyor direction 110, with the first article receiving unit (a₁). The advantageous benefits as described above in relation to Figs. 1-7 for the controlled motion system 100 are thus realized while performing method 200, i.e. an improved and more efficient grouping of articles on the conveyor track 109.

The method 200 may comprise accelerating 204 the first mover 110 to push a leading article 302 of the first pair 301 downstream of the conveyor direction, and to decelerate the first mover 101 to push a trailing article 303 of the first pair 301 upstream of the conveyor direction 110.

A computer program product is provided comprising instructions which, when the program is executed by a computer, cause the computer to carry out the steps of the method 200 as described above in relation to Fig. 8.

A packaging machine (not shown) is provided comprising a controlled motion system 100 as described above in relation to Figs. 1 - 7, and/or performing the method 200 as described above in relation to Fig. 8.

From the description above follows that, although various embodiments of the invention have been described and shown, the invention is not restricted thereto, but may also be embodied in other ways within the scope of the subject-matter defined in the following claims.

## Claims

1. A controlled motion system (100), comprising
a linear track (104),
a plurality of movers (101, 102, 103) being movably mounted on the linear track (104) for moving along a path (105),
a control unit (106) in communication with the plurality of movers (101, 102, 103) and configured to control the speed of the plurality of movers (101, 102, 103) and individual positions thereof along the path (105),
wherein a first mover (101) comprises a first article receiving unit (a₁) configured to move along the path (105) to intersect a conveyor track (109), along which articles (300) are conveyed with a conveyor speed in a conveyor direction (110),
whereby the first article receiving unit (a₁) is configured to engage a first pair (301) of the articles (300), by being movable in between articles (302, 303) of the first pair (301), for manipulating the positions thereof along the conveyor direction (110),
wherein the control unit (106) is configured to accelerate (a) or decelerate (d) the first mover (101) to a first speed, different from the conveyor speed, to push the articles (302, 303) of the first pair (301) on the conveyor track (109), along the conveyor direction (110), with the first article receiving unit (a₁).

2. A controlled motion system according to claim 1, wherein the control unit (106) is configured to accelerate or decelerate the first mover (101) to push at least one article (302, 303) in a first direction with the first article receiving unit (a₁), downstream or upstream of the conveyor direction (110), and to subsequently accelerate or decelerate the first mover (a₁) to push at least one article (302, 303) in a second direction, opposite the first direction.

3. A controlled motion system according to claim 1 or 2, wherein the control unit (106) is configured to accelerate the first mover (a₁) to push a leading article (302) of the first pair (301) downstream of the conveyor direction (110) with the first article receiving unit (a₁), and to decelerate the first mover to (101) push a trailing article (303) of the first pair (301) upstream of the conveyor direction (110) with the first article receiving unit (a₁).

4. A controlled motion system according to any of claims 1 - 3, comprising a second mover (103) comprising a second article receiving unit (a₂),
wherein the second article receiving unit (a₂) is configured to engage a second pair (308) of the articles (300), by being movable in between the articles (304, 305) of the second pair (308), upstream or downstream of the first article receiving unit (a₁),
wherein the second article receiving unit (a₂) has a separation distance (s) from the first article receiving unit (a₁),
wherein the first and second article receiving units (a₁, a₂) are configured to accelerate or decelerate so that the separation distance (s) is increased or decreased, to push at least one article (302, 303, 304, 305) of the first or second pair (301, 308) on the conveyor track (109).

5. A controlled motion system according to claim 4, wherein the separation distance (s) is decreased so that a group of articles (GR2) positioned between the first and second article receiving units (a₁, a₂) are pushed together, whereby at least one gap (G2, G3) between the articles is reduced.

6. A controlled motion system according to claim 4 or 5, wherein the second article receiving unit (a₂) is configured to be accelerated to push a leading article (304) of the second pair (308) downstream of the conveyor direction (110), and to be decelerated to push a trailing article (305) of the second pair (308) upstream of the conveyor direction (110).

7. A controlled motion system according to claim 5, wherein the second article receiving unit (a₂) is positioned upstream of the first article receiving unit (a₁), relative the conveyor direction (110), whereby the separation distance (s) is reduced when the second article receiving unit (a₂) is accelerated.

8. A controlled motion system according to claim 7, wherein the second article receiving unit (a₂) is configured to be accelerated to push a leading article (304) of the second pair (308) downstream of the conveyor direction (110), and
wherein the first article receiving unit (a₁) is configured to be decelerated to push a trailing article (303) of the first pair (301) upstream of the conveyor direction (110).

9. A controlled motion system according to claim 8, wherein the second article receiving unit (a₂) is configured to push a first determined distance (Gd) downstream based on a first fraction of the total gap (GT) between a group of articles (GR2) positioned between the first and second article receiving units (a₁, a₂).

10. A controlled motion system according to claim 9, wherein the first determined distance (Gd) is half the distance of the total gap (GT).

11. A controlled motion system according to any of claims 8 - 10, wherein the first article receiving unit (a₁) is configured to push a second determined distance (Gd') upstream based on a second fraction of the total gap (GT).

12. A controlled motion system according to claim 11, wherein the second determined distance (Gd') is GT - Gd.

13. A controlled motion system according to any of claims 1 - 12, wherein the first article receiving unit (a₁) is configured to move with the conveyor speed when at an intermediate position (p₁, p'₁) adjacent an article (302, 303), before being accelerated or decelerated to push the article (302, 303).

14. A controlled motion system according to any of claims 13, wherein the first article receiving unit (a₁) is configured to be positioned at a first intermediate position (p₃) adjacent a first article (302) of the first pair (301), before subsequently pushing the first article (302) in a first direction, and to be positioned at a second intermediate position (p3') at a second article (303) of the first pair (301), before pushing the second article (303), in a direction opposite the first direction.

15. A controlled motion system according to any of claims 4 - 12, wherein the second article receiving unit (a₂) is positioned upstream of the first article receiving unit (a₁),
wherein the second article receiving unit (a₂) is configured to be accelerated to reduce the separation distance (s) while the first article receiving unit (a₁) is in an intermediate position (p'₃) adjacent the last article (303) in the group of articles (GR2) between the first and second article receiving units (a₁, a₂).

16. Method (200) in a controlled motion system (100) having a linear track (104) and a plurality of movers (101, 102, 103) being movably mounted on the linear track (104) for moving along a path (105), the method comprising
moving (201) a first article receiving unit (a₁) of a first mover (101) to intersect (202) a conveyor track (109), along which articles (300) are conveyed with a conveyor speed in a conveyor direction (110),
engaging (203) a first pair (301) of the articles (300) by moving the first article receiving unit (a₁) in between articles (302, 303) of the first pair (301) for manipulating the positions thereof along the conveyor direction (110),
accelerating (204) or decelerating (205) the first mover (101) to a first speed, different from the conveyor speed, to push the articles (302, 303) of the first pair (301) on the conveyor track (109), along the conveyor direction (110), with the first article receiving unit (a₁).

17. Method according to claim 16, comprising accelerating (204') the first mover (110) to push a leading article (302) of the first pair (301) downstream of the conveyor direction, and to decelerate the first mover (101) to push a trailing article (303) of the first pair (301) upstream of the conveyor direction (110).

18. A computer program product comprising instructions which, when the program is executed by a computer, cause the computer to carry out the steps of the method according to any of claims 16 - 17.

19. A packaging machine comprising a controlled motion system (100) according to any of claims 1 - 15, and/or performing the method (200) according to any of claims 16 - 17.
